(19) Europäisches Patentamt
European Patent Office
Office européen des brevets

(11) Veröffentlichungsnummer: **0 521 177 A1**

(12) # EUROPÄISCHE PATENTANMELDUNG

(21) Anmeldenummer: **91110847.0**

(51) Int. Cl.5: **G06F 15/40**

(22) Anmeldetag: **01.07.91**

(43) Veröffentlichungstag der Anmeldung:
**07.01.93 Patentblatt 93/01**

(84) Benannte Vertragsstaaten:
**AT BE CH DE ES FR GB IT LI NL SE**

(71) Anmelder: **Siemens Nixdorf Informationssysteme Aktiengesellschaft**
**Fürstenallee 7**
**W-4790 Paderborn(DE)**

(72) Erfinder: **Oberprieler, Sebastian**
**Karpfenstrasse 4**
**W-8052 Moosburg(DE)**
Erfinder: **Spenke, Hubert, Dipl.-Kfm.**
**Knappertsbuchstrasse 31**
**W-8000 München 81(DE)**
Erfinder: **Vitzthum, Fred, Dipl.-Inf.**
**Westendstrasse 14**
**W-8011 Kirchheim(DE)**

(74) Vertreter: **Fuchs, Franz-Josef, Dr.-Ing. et al**
**Postfach 22 13 17**
**W-8000 München 22(DE)**

(54) **Schnittstellensteuerung zur Ansteuerung von Datenbanksystemen.**

(57) Die neue Schnittstellensteuerung (DUNST) ermöglicht die Erstellung von Anwenderprogrammen (AP...), die unabhängig vom jeweiligen Datenbanksystem und seiner Manipulationssprache allgemein verwendbar sind,

- durch Zusammenfassung von datenbankbezogenen Befehlsfolgen der bisherigen Anwenderprogramme in globale Verarbeitungsfunktionen (GVF) als neue Aufrufbefehle für die Schnittstellensteuerung,
- durch den Verarbeitungsfunktionen (GVF) individuell zugeordnete Ablaufeinheiten (ABLE...), in denen alle für die Ausführung benötigten Zugriffsbefehle samt Parameter in der jeweiligen Manipulationssprache des Datenbanksystems zusammengefaßt sind,
- durch Anschluß der Datenbanksysteme über individuelle Zugriffseinheiten (ZE...) zur feldgerechten Zuordnung von Daten und Parametern sowie zur Neutralisierung der Rückmeldungen,
- durch aufrufbare Übertragungsregeln in Abbildungstabellen (ATAB...) entsprechend den Feldbeziehungen zwischen den Feldern der verschiedenen Datensätze des Datenbanksystems und denen der jeweiligen Übergabe- und Tabellenbereichen (UEB, TABB) des Anwenderprogramms zur Übertragung der Daten und
- durch eine gemeinsame Schnittstellensteuereinheit (SS-STE) zur Überwachung und Versorgung der Schnittstellen und zur Steuerung des Arbeitsablaufes in Verbindung mit der Ablaufeinheit (ABLE...).

EP 0 521 177 A1

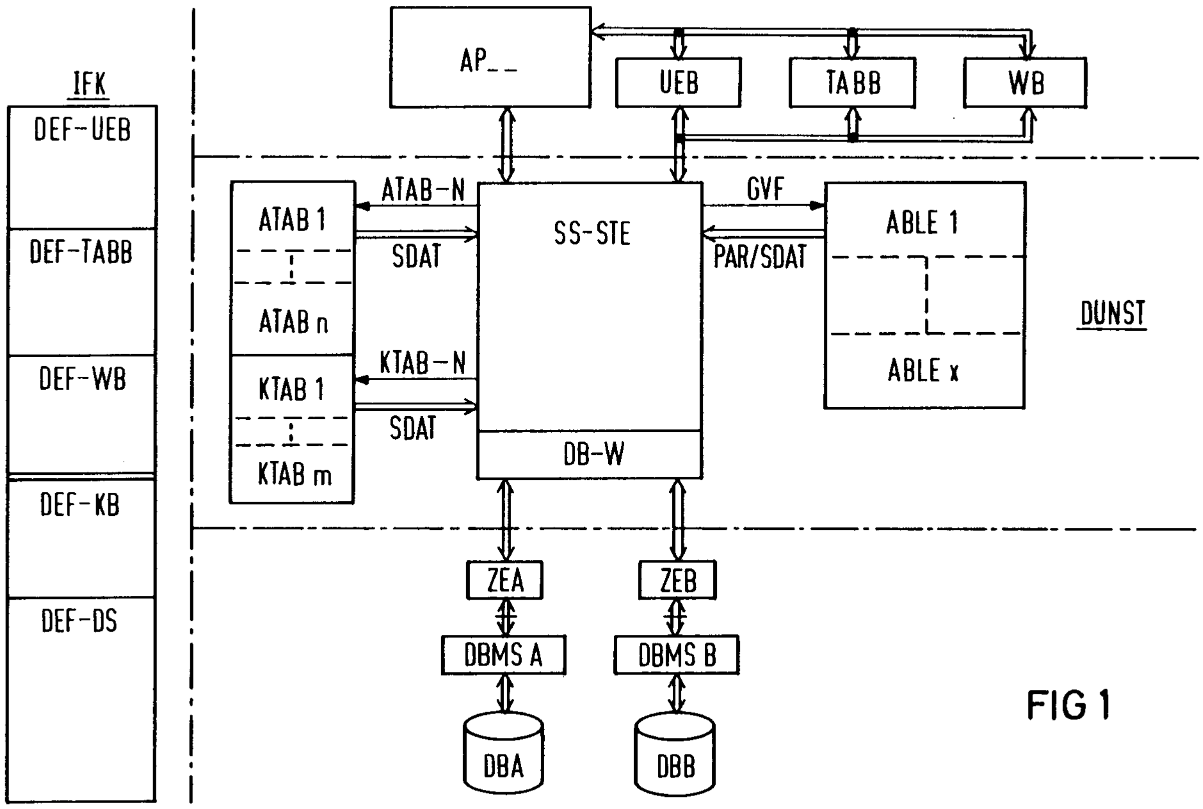
IFK
DEF-UEB
DEF-TABB
DEF-WB
DEF-KB
DEF-DS
AP_ _
UEB
TABB
WB
ATAB-N
ATAB 1
SDAT
ATAB n
KTAB-N
KTAB 1
SDAT
KTAB m
SS-STE
DB-W
GVF
PAR/SDAT
ABLE 1
ABLE x
DUNST
ZEA
ZEB
DBMS A
DBMS B
DBA
DBB

FIG 1

Die Erfindung betrifft eine Schnittstellensteuerung zur Ansteuerung von Datenbanksystemen gemäß dem Oberbegriff des Patentanspruches 1.

Zur Speicherung der für die Bearbeitung betrieblicher oder administrativer Vorgänge notwendigen Daten verwendet man in der Regel Datenbanksysteme. Diese können in unterschiedlicher Weise strukturiert sein, und für den Zugriff auf diese Datenbanksysteme, um Daten selektiv lesen und verändern zu können, sind spezielle Manipulationssprachen entwickelt worden - man siehe z.B. P.C. Lockemann und J.W. Schmidt: "Datenbank-Handbuch", Springer-Verlang Berlin/Heidelberg, 1987. Bindeglied zur Benutzeroberfläche einer Datenverarbeitungsanlage sind dabei Anwenderprogramme die meist in konventionellen Programmiersprachen, z.B. COBOL, PL/1, PASCAL, FORTRAN, erstellt und mit der Manipulationssprache des jeweiligen Datenbanksystems gekoppelt sind. Diese Anwenderprogramme dienen der Lösung vielfältiger Aufgaben in den einzelnen betrieblichen Bereichen der verschiedenen Branchen.

Die Erstellung der einzelnen Anwenderprogramme erfordert eingehende Kenntnisse des jeweils zu betreibenden Datenbanksystems und der zugehörigen Manipulationssprache, und bei jeder Änderung des Datenbanksystems oder der Zugriffsmethode müssen die vorhandenen Anwenderprogramme in größerem Umfange angepaßt oder gar vollkommen neu erstellt werden.

Ein weiterer Nachteil solcher Anwenderprogramme ist, daß die notwendigen einzelnen Zugriffe auf das jeweilige Datenbanksystem in der Regel in vollem Umfange programmiert werden müssen, da jeweils nur ein Datensatz aus dem Datenbanksystem gelesen und geändert werden kann. Zwar erlauben es zusätzliche Steuerungen, z.B. View-Manager, Kombinationen von Datenfeldern aus verschiedenen Datensätzen aufgrund nur eines entsprechenden Zugriffsbefehls im Anwenderprogramm zusammenzustellen, jedoch sind zum Aufbau von Tabellen aus solchen Feldkombinationen die Zugriffsbefehle und die damit verbundenen Prüfungen für jede Tabellenzeile im Anwenderprogramm zu wiederholen.

Zweck der Erfindung ist es daher, eine Schnittstellensteuerung als Bindeglied zwischen den Anwenderprogrammen und dem jeweiligen Datenbanksystem zu schaffen, die die Erstellung von Anwenderprogrammen ermöglicht, die unabhängig vom jeweiligen Datenbanksystem und seiner Manipulationssprache allgemein verwendbar sind.

Diese Aufgabe wird durch die kennzeichnenden Merkmale des Patentanspruches 1 gelöst.

Danach werden datenbankbezogene Befehlsfolgen der bisherigen Anwenderprogramme, die ohne Unterbrechung von außen, sei es durch Eingabe neuer Parameter oder in Folge notwendiger Änderungen gelesener Daten durch das Anwenderprogramm, ablaufen können, zu neuen globalen Verarbeitungsfunktionen zusammengefaßt, die als Aufrufbefehle in das jeweilige Anwenderprogramm eingebettet werden. Diesen Aufrufbefehlen entsprechen in der Schnittstellensteuerung individuelle Ablaufeinheiten, in denen alle für die Ausführung der zugehörigen globalen Verarbeitungsfunktion benötigten Zugriffsbefehle samt der zugehörigen Parameter für das Datenbanksystem in der jeweiligen Manipulationssprache als Befehlsfolge zusammengefaßt sind. Die sonst in jedem Anwenderprogramm zu wiederholende Befehlsfolge ist damit in eine zentrale Schnittstelle verlagert, so daß bei einer Änderung des Datenbanksystems lediglich die einzelnen Ablaufeinheiten abzuändern oder neu zu erstellen sind.

Außerdem wird jedes Datenbanksystem an die neutrale Schnittstelle über eine individuelle Zugriffseinheit angeschlossen, damit die von der Schnittstellensteuerung gelieferten Parameter und Daten den einzelnen Parameter- und Datenfeldern der jeweiligen Zugriffssteuerung des Datenbanksystems feldgerecht zugeordnet und datenbankbezogene Rückmeldungen in neutrale Rückmeldungen für das Anwenderprogramm umgesetzt werden können.

Gleichzeitig mit jedem Aufruf durch eine globale Verarbeitungsfunktion aufrufbare Abbildungstabellen, die ebenfalls nur einmal zu erstellen sind und in denen die Feldbeziehungen zwischen denen der verschiedenen Datensätze im Datenbanksystem einerseits und denen der Übergabe- und Tabellenbereiche des jeweiligen Anwenderprogrammes festgelegt sind, ermöglichen außerdem in an sich bekannter Weise die Bereitstellung beliebiger Feldkombinationen aus einem oder aus mehreren verschiedenen Datensätzen des Datenbanksystems. Durch Ausnutzung dieser Abbildungstabellen ist es weiterhin möglich, mit einer einzigen globalen Verarbeitungsfunktion, d.h. einem einzigen Aufruf der Schnittstellensteuerung, einzelne Feldkombinationen oder auch eine Vielzahl gleichartiger Feldkombinationen in Form einer Tabelle zu erhalten und dem Anwenderprogramm zur Verfügung zu stellen.

Weiterbildungen dieses Lösungsprinzips ergeben sich aus den Unteransprüchen. Diese betreffen die Bildung der globalen Verarbeitungsfunktionen aus den Anteilen zweier Teilmengen Funktionsklasse und Transferfunktion, die Verwendung gesonderter Funktionsklassen für "Eröffnen" und "Schließen" des jeweiligen Datenbanksystems sowie die Gestaltung der Ablaufeinheiten insbesondere zum Anschluß unterschiedlicher Datenbanksysteme an die Schnittstellensteuerung.

Einzelheiten der Erfindung seien nachfolgend anhand eines in der Zeichnung dargestellten Ausführungsbeispieles näher erläutert. Im einzelnen zeigen:

| | |
|---|---|
| FIG 1 | ein Strukturbild der Schnittstellensteuerung gemäß der Erfindung, |
| FIG 2 | eine Abbildungstabelle der Schnittstellensteuerung von FIG 1, |
| FIG 3A und FIG 3B | einen Steuersatz der Satzart 1 in den Ablaufeinheiten der Schnittstellensteuerung von FIG 1, |
| FIG 4 | einen Steuersatz der Satzart 2 in den Ablaufeinheiten der Schnittstellensteuerung von FIG 1, |
| FIG 5 | einen Steuersatz der Satzart 3 in den Ablaufeinheiten der Schnittstellensteuerung von FIG 1, |
| FIG 6A bis FIG 6C | ein Ablaufdiagramm zur Erläuterung der Arbeitsweise der Schnittstellensteuereinheit in der Schnittstellensteuerung von FIG 1, |
| FIG 7 | ein Beispiel für die Satzbeziehungen zwischen den Stammdatensätzen einzelner Stücklistenpositionen, und |
| FIG 8 | die der globalen Verarbeitungsfunktion "Stückliste auflösen" entsprechende Ablaufeinheit zur Ermittlung der sich aus FIG 7 ergebenden Stückliste. |

FIG 1 zeigt ein Strukturbild der zwischen den verschiedenen Arbeitsprogrammen AP... mit ihrem Übergabebereich UEB, ihrem Tabellenarbeitsbereich TABB und ihrem Werkbereich WB einerseits sowie dem jeweiligen Datenbanksystem, z.B. DBA und DBB, andererseits vorgesehenen datenbankunabhängigen neutralen Schnittstellensteuerung DUNST, wobei jedes Datenbanksytem, z.B. DBA, mit der zugehörigen Zugriffssteuerung, z.B. DBMSA, über eine vorgeschaltete datenbankabhängige Zugriffseinheit, z.B. ZEA, an die Schnittstellensteuerung DUNST angekoppelt ist.

In einem Feldkatalog IFK sind in herkömmlicher Weise die einzelnen Datenfelder aller in den Datenbanksystemen DB... gespeicherten Datensätze DS erfaßt und definiert (Bereich DEF-DS). Gleiches gilt für die Beziehungen zwischen den Datenfeldern unterschiedlicher Satzarten als Schlüssel (Bereich DEF-KB). Daneben beinhaltet der Feldkatalog IFK die Definitionen für die Übergabebereiche UEB (Bereich DEF-UEB), für die Tabellenbereiche TABB (Bereich DEF-TABB) und für die Werkbereiche WB (Bereich DEF-WB) der einzelnen Anwenderprogramme AP....

Für alle diese Definitionen kann zum Beispiel der interaktive Feldkatalog des Systems SILINE 400-CO, das z.B. in der Siemens-Druckschrift U3322-J-Z87-1 beschrieben ist, verwendet werden, wobei analog zur Verwaltung der Masken mit ihren Datenfeldern nun ein Datensatzname und dessen Feldbeschreibungen aufgenommen und der Feldkatalog um die Auswahlzeile "Datensatz" erweitert werden muß.

Durch entsprechende Satzarten für die einzelnen Definitionsbereiche lassen sich dann die einzelnen Bereiche in herkömmlicher und einheitlicher Weise definieren. Aus diesen Definitionen können dann in bekannter Weise Copy-Elemente für die jeweils benötigten anwenderspezifischen Bereiche und die aus dem Datenbanksystem gelesenen Datensätze generiert werden.

Um darüberhinaus in der Schnittstellensteuerung DUNST die jeweils benötigten Verbindungen zwischen den Feldern des jeweils gelesenen Datensatzes DS und den Feldern der benötigten anwenderspezifischen Bereiche UEB bzw. TABB und/oder WB herstellen zu können, werden zusätzliche Abbildungstabellen ATAB... benötigt, die durch individuelle Namen gekennzeichnet sind.

Die Zuordnung der Felder erfolgt dabei nicht über Feldnamen, sondern über Adressen und Positionsnummern, so daß gegenüber den Anwenderprogrammen die Bindung an die Struktur des Datenbanksystems aufgehoben ist.

FIG 2 zeigt ein Beispiel einer solchen Abbildungstabelle ATAB... mit den wichtigsten Angaben. Danach werden ausgehend vom Namen (Spalte 1) eines vorgegebenen Datensatzes (DS) des Datenbanksystems die benötigten Felder (Spalte 2) anhand von Adresse (Spalte 3) und Feldlänge (Spalte 4) ausgewählt und an den gewünschten Bereich, nämlich UEB entsprechend U, TABB entsprechend A und WB entsprechend W (Spalte 6) in das dort durch die zuständige Adresse (Spalte 7) gekennzeichnete Feld übertragen und umgekehrt, wobei Spalte 5 den Typ des Feldinhaltes, z.B. A für Alpha oder N für numerisch, kennzeichnet.

Im Feldkatalog IFK werden außerdem in herkömmlicher Weise Definitionen über die bestehenden Beziehungen zwischen Datenfeldern unterschiedlicher Satzarten des Datenbanksystems als Schlüssel K verwaltet, so daß z.B. ein Satz B anhand eines Feldes aus Satz A als Schlüsselwert gelesen werden kann. Aus diesen Schlüsselbeziehungen lassen sich ebenfalls Schlüsselabbildungstabellen KTAB... generieren, anhand derer dann Suchvorgänge gesteuert werden können.

Die Abbildungs- und Schlüsseltabellen werden jeweils nur einmal und im gleichen Generierungslauf erstellt , wobei in der Schlüsselabbildungstabelle KTAB... jeweils nur die Satzarten berücksichtigt werden, die bei der Generierung der zugehörigen Abbildungstabelle ATAB... verwendet werden.

Die generierten Abbildungstabellen ATAB... und Schlüsseltabellen KTAB... werden zweckmäßig in einem gesonderten Speicherbereich abgespeichert, aus dem dann die jeweils benötigten Tabellen bei Bedarf in einen Arbeitsspeicherbereich der Schnittstellensteuerung DUNST geladen werden.

In Auswirkung der Erfindung stehen der Schnittstellensteuerung DUNST außerdem eine Reihe von Ablaufeinheiten ABLE... zur Verfügung, die ebenfalls in einem gesonderten Speicherbereich abgespeichert sein können, aus dem dann die jeweils benötigte Ablaufeinheit bei Bedarf in einen Arbeitsspeicherbereich der Schnittstellensteuerung DUNST geladen wird.

Diese Ablaufeinheiten ABLE... sind jeweils einer globalen Verarbeitungsfunktion GVF des jeweiligen Arbeitsprogrammes AP... zugeordnet und werden daher bei Aufrufen der Schnittstellensteuerung DUNST von einem Anwenderprogramm AP... aus durch die jeweilige globale Verarbeitungsfunktion GVF ausgewählt. In jeder Ablaufeinheit ABLE... sind jeweils alle im Rahmen der zugehörigen globalen Verarbeitungsfunktion GVF auszuführenden Datenbankzugriffe und die damit verbundenen Operationen der Schnittstellensteuerung DUNST datenbankabhängig beschrieben, die notwendig sind, um die globale Verarbeitungsfunktion GVF durchzuführen.

Die globalen Verarbeitungsfunktionen GVF stellen daher allgemeine, datenbankunabhängige Programmieranweisungen in den Anwenderprogrammen für die verschiedensten Anwendungszwecke dar, wie z.B. "Erstellen Liste XYZ" oder "Löse Stückliste ABC auf", die anwendungsbezogene Teilfunktionen ohne Berücksichtigung der Datenstrukturierung im Datenbanksystem erfüllen. Einzige Voraussetzung ist dabei, daß während der Ausführung einer solchen globalen Verarbeitungsfunktion GVF kein Eingriff von außen erfolgen darf, etwa durch Eingabe neuer Parameter oder in Folge notwendiger Änderungen gelesener Daten durch das Anwenderprogramm. In diesem Fall muß die Anwenderfunktion in einzelne, nicht unterbrechbare globale Verarbeitungsfunktionen aufgespalten werden.

So ist z.B. die Anwenderfunktion "Löschen Stammdaten" in wenigstens zwei globale Verarbeitungsfunktionen aufzulösen, wobei nach Eingabe der Sachnummer des zu löschenden Stammdatensatzes über den Bildschirm mit der ersten globalen Verarbeitungsfunktion das zuständige Datenbanksystem eröffnet und der Stammdatensatz gelesen wird. Nach Überprüfung des gelesenen Satzes durch das Anwenderprogramm, z.B. ob der gesuchte Satz vorhanden ist, wird dann mit der zweiten globalen Verarbeitungsfunktion das Datenbanksystem erneut zum Ändern eröffnet, und es werden der Stammdatensatz und alle mit diesem in Bezug stehenden Sätze gelöscht.

Die Ablaufeinheiten ABLE... für die einzelnen globalen Verarbeitungsfunktionen GVF sind in einzelne Positionen gegliedert, die jeweils einem Datensatz einer von drei vorgegebenen Satzarten entsprechen. Die Sätze der Satzart 1 beinhalten die Zugriffe für die jeweilige Datenbank mit sämtlichen Angaben, um einen CALL-DML-Aufruf absetzen zu können, und Steuerparameter, während die Sätze der Satzart 2 einen Suchausdruck in Ergänzung der Zugriffsbefehle aus der Satzart 1 liefern, so daß bei einem Lesebefehl gemäß Satzart 1 z.B. alle Datensätze der Datenbank ausgewählt werden können, die den Suchausdruck gemäß der Satzart 2 erfüllen. Die Sätze der Satzart 3 dienen schließlich dazu, um beim Abarbeiten einzelner Positionen innerhalb einer Ablaufeinheit Vergleichs- oder Rechenoperationen durchführen zu können und um bedingte und unbedingte Sprünge bei der Abarbeitung der Positionsfolge zu ermöglichen.

FIG 3 bis FIG 5 zeigen Beispiele für den Aufbau der drei verschiedenen Satzarten, die in den ersten vier Feldern übereinstimmen, während die übrigen Felder sich satzartabhängig unterscheiden. So kennzeichnen bei der Satzart 1 gemäß FIG 3A und 3B die Felder 6 bis x datenbankabhängig den jeweils betroffenen Datensatz im Datenbanksystem, die Art des Zugriffs und der damit verbundenen Transferrichtung für die Datenbewegung durch die Schnittstellensteuerung sowie weitere notwendige Angaben für den Zugriff auf das Datenbanksystem, während die restlichen Felder $x+1$ bis $x+6$ Steuerinformationen für die Schnittstellensteuereinheit SS-STE liefern, die den Arbeitsablauf in der Schnittstellensteuerung DUNST steuert. Abgesehen von den Feldern $x+4$ und $x+5$ sind dies, ebenso wie die übrigen Felder der beiden anderen Satzarten 2 und 3 gemäß FIG 4 und 5, Felder für Steuerangaben, die normalerweise im jeweiligen Anwenderprogramm AP... vorzusehen bzw. zu berücksichtigen sind, um die jeweils gewünschte Aufgabe zu bewältigen. Im vorliegenden Fall sind diese datenbankbezogenen Steuerungsabläufe vollständig in die Schnittstellensteuerung DUNST verlagert. Lediglich die beiden Steuerfelder $x+4$ und $x+5$ sind eine Auswirkung der Erfindung, wobei das Steuerfeld $x+5$ anzeigt, ob ein Suchvorgang einzuleiten ist, zu dem der in der Positionsfolge nächstfolgende Satz in Form Satzart 2 die Angaben für die Zusammenstellung des Suchausdruckes liefert. Das Feld $x+4$ mit dem Datenbankkennzeichen DH ermöglicht dagegen den gleichzeitigen Anschluß verschiedener Datenbanksysteme, z.B. UDS, LEASY, SESAM, mit unterschiedlichen Datenstrukturen und Zugriffsbefehlen an ein- und diesselbe Schnittstellensteuerung DUNST, wobei das Datenbankkennzeichen als Steuersignal für die Ansteuerung des jeweils betroffenen Datenbanksystems DB über die entsprechend einzustellende Weiche DB-W in FIG 1 dient.

In Auswirkung der datenbankbezogenen Angaben in den Steuersätzen der einzelnen Ablaufeinheiten ABLE..., die bezogen auf das jeweils angeschaltete Datenbanksystem zum Teil sehr unterschiedliche Feldaufteilungen bedingen, erfolgt die Ansteuerung der einzelnen Datenbanksysteme außerdem über individuelle Zugriffseinheiten ZE... gemäß FIG 1, die die von der Schnittstellensteuerung DUNST gelieferten

Angaben datenbankgerecht den einzelnen Parameter- und Datenfeldern der jeweiligen Zugriffssteuerung DBMS... zuordnen und datenbankbezogene Rückmeldungen in neutrale Rückmeldungen für das jeweilige Anwenderprogramm AP... umsetzen, was in bekannter Weise anhand von entsprechenden Abbildungs- und Umsetztabellen erfolgen kann.

In Verbindung mit diesen jeweils datenbankbezogenen individuellen Zugriffseinheiten ZE..., die der jeweiligen Zugriffssteuerung DBMS... vorgeschaltet sind, ergibt sich damit eine vollkommene Unabhänigkeit der Anwenderprogramme AP... von den an die neutrale Schnittstellensteuerung DUNST angeschlossenen Datenbanksystemen DB.... Eine Änderung oder ein Wechsel des Datenbanksystems hat daher lediglich Auswirkung auf den Feldkatalog IFK und auf die Ablaufeinheiten ABLE..., die entsprechend neu zu erstellen sind. Andererseits können mit nur einem einzigen Zugriff vom Anwenderprogramm AP... aus jeweils alle relevanten Daten im Rahmen einer globalen Verarbeitungsfunktion GVF und beschränkt auf den jeweils benötigten Umfang erhalten werden, wobei die dafür notwendigen Operationen und Folgen von Datenbankzugriffen durch die einzelnen Ablaufeinheiten ABLE... vorgegeben und gesteuert werden.

Die einzelnen globalen Verarbeitungsfunktionen GVF werden zweckmäßig aus zwei Teilmengen gebildet, nämlich der Funktionsklasse FKT und der Transferfunktion TFKT, da viele Transferfunktionen in mehreren Funktionsklassen zur Anwendung gelangen können. Mehrfachspeicherungen der einzelnen Transferfunktionen innerhalb der einzelnen Funktionsklassen werden dadurch umgangen. Funktionsklassen im Rahmen der Stücklistenverwaltung sind beipsielsweise "Auflösen" und "Ändern" in Verbindung mit den Transferfunktionen "Anzeigen", "Modifizieren" und "Löschen", wobei die Transferfunktion "Anzeigen" in Verbindung mit beiden Funktionsklassen benötigt wird.

Vorteilhaft ist es auch, für das Eröffnen und Schließen der einzelnen Datenbanksysteme DB... eigenständige Funktionsklassen vorzusehen, z.B. "OPEN" für Eröffnen und "CLOSE" für Schließen des Datenbanksystems, wobei sich anhand verschiedener Transferfunktionen differenzieren läßt, ob beispielsweise ein "READY RETRIEVAL" oder ein "READY UPDATE" bzw. ein "FINISH" oder ein "FINISH WITH CANCEL" bezüglich des Datenbanksystems UDS ausgeführt werden soll.

Ebenso ist es notwendig, vor dem erstmaligen Aufruf der Schnittstellensteuerung DUNST im Rahmen der Ausführung einer Anwenderfunktion durch eine gesonderte Transferfunktion, z.B. "00", den Übergabebereich UEB und den Tabellenarbeitsbereich TABB anhand der Abbildungstabelle ATAB feldtypgerecht zu initialisieren, um Datenverfälschungen zu vermeiden.

Im übrigen aber sollten die Transferfunktionen so umfangreich wie möglich gestaltet werden. Die dadurch bedingte geringe Anzahl von Aufrufen an die Schnittstellensteuerung führt zu einem besseren Laufzeitverhalten. Außerdem läßt sich die Neutralität der Datenhaltung leichter gewährleisten.

Weiteres Kernstück der Schnittstellensteuerung DUNST ist die Schnittstellensteuereinheit SS-STE, die die Schnittstellen zum Anwenderprogramm AP... und zu den Datenbanksystemen DB... überwacht, die Schnittstellenbereiche abhängig von der jeweiligen Ablaufeinheit ABLE... und der gewählten Abbildungstabelle ATAB... mit den jeweiligen Daten versorgt und den gesamten Arbeitsablauf in der Schnittstellensteuerung DUNST steuert. Die Arbeitsweise dieser Schnittstellensteuereinheit SS-STE ergibt sich aus dem Flußdiagramm von FIG 6A bis FIG 6C.

Mit dem Aufruf der Schnittstellensteuerung DUNST durch eines der Anwenderprogramme AP... nach vorheriger Bereitstellung der notwendigen Aufrufdaten, nämlich u.a. Funktionsklasse und Transferfunktion zur Festlegung der benötigten Ablaufeinheit ABLE..., Name der Abbildungstabelle ATAB..., Angaben zur Festlegung des Subschemas im Datenbanksystem, beispielsweise in Form von Mandant, Firma und Sachgebiet, sowie Angaben über die zu verwendenden Bereich WB, UEB oder TABB, wird gemäß FIG 6A zunächst geprüft, ob entsprechend der Transferfunktion "00" eine Initialisierungsroutine einzuleiten ist, indem anhand der geladenen Abbildungstabelle ATAB die benötigten Felder des Übergabebereichs UEB gelöscht werden und die mit einer Rückmeldung RM an das Anwenderprogramm endet.

Bei einem erneuten Aufruf werden dann die benötigten Tabellen ATAB und eventuell KTAB sowie die vorgegebene Ablaufeinheit ABLE geladen und der erste Satz entsprechend der ersten Position aus der Ablaufeinheit gelesen.

Nach jedem gelesenen Satz wird dann geprüft, ob er zur gewünschten globalen Verarbeitungsfunktion - Übereinstimmung von Funktionsklasse und Transferfunktion - gehört. Ist dies nicht der Fall, erfolgt eine entsprechende Rückmeldung RM an das Anwenderprogramm AP..., und der Steuerungsablauf wird beendet. Liegt kein Wechsel vor, wird geprüft, welcher Satzart der gelesene Satz angehört. Ist bei Vorliegen der Satzart 1 kein Schleifenbetrieb vorgesehen, wird geprüft, ob das Kennzeichen für die Satzart 2 gesetzt und daher unmittelbar der in der Positionsfolge an nächster Position stehende Satz zu lesen ist. Ist dies nicht der Fall, wird über den Anschluß F in die Vorbereitungen zur Ansteuerung des Datenbanksystems gemäß FIG 6C übergeleitet.

Gehört der gelesene Satz nicht der Satzart 1 an, wird über den Anschluß A auf die Bearbeitung von

Sätzen der Satzart 2 oder 3 gemäß FIG 6B übergeleitet. Ist es ein Satz der Satzart 2, erfolgt der Aufbau des Suchausdruckes für das Datenbanksystem aus den durch die Angaben im gelesenen Steuersatz gekennzeichneten Feldern des Werkbereiches WB anhand der Abbildungstabelle ATAB.... Danach wird gemäß der Verbindung des Anschlusses B mit dem Anschluß F in FIG 6A ebenfalls der gemäß FIG 6C festgelegte Ablauf eingeleitet.

Gehört der gelesene Steuersatz der Satzart 3 an und ist nur eine Sprungoperation auszuführen, dann wird unmittelbar auf die angegebene Zielposition in der Ablaufeinrichtung ABLE eingestellt. Im anderen Falle werden die im Steuersatz angegebenen Prüfungen und Feldübertragungen ausgeführt. Werden dabei die mit den Prüfungen verbundenen Bedingungen erfüllt und ist ein Sprungziel angegeben, erfolgt ein Aussprung aus der linearen Positionsabfolge, und zwar entweder auf die Position des Schleifenendes oder, falls das Ende der Transferfunktion und damit der globalen Verarbeitungsfunktion noch nicht erreicht ist, auf die angegebene Zielposition.

Ist dagegen das Ende der Transferfunktion erreicht, was beispielsweise am Sprungeintrag "999" erkennbar ist, dann erfolgt unmittelbar gemäß Anschluß D zur FIG 6A eine Rückmeldung an das Anwenderprogramm AP... mit Beendigung des eingeleiteten Steuerungsablaufes.

Bei nichterfüllter Bedingung oder bei Fehlen einer Sprungzielangabe wird der Positionszeiger für die Ablaufeinheit ABLE... unmittelbar auf den nächstfolgenden Satz eingestellt. Nach Einstellung des Positionszeigers entsprechend den drei mittleren Ablaufzweigen von FIG 6B mit dem gemeinsamen Anschluß C wird gemäß FIG 6A der Satz der angegebenen Position in der Ablaufeinheit gelesen und der bisher beschriebene Ablauf beginnt von neuem mit der Prüfung des neu gelesenen Satzes.

Wie bereits anhand von FIG 3 erwähnt, kann der Funktionscode in der Satzart 1 auch allein zur Kennzeichnung eines Schleifenanfanges oder eines Schleifenendes im Steuerungsablauf verwendet werden. Ist gemäß FIG 6A daher ein Schleifenanfang markiert, werden zunächst im Tabellenbereich TABB gegebenenfalls vorgegebene Daten an den Datensatzbereich übergeben, bevor der Positionszeiger auf den nächsten Satz in der Ablaufeinheit eingestellt wird. Umgekehrt werden bei jeder Schleifenendemarkierung die vorgegebenen Felder aus dem vom Datenbanksystem bereitgestellten Datensatz DS in den Tabellenbereich TABB übertragen, bevor auf die Position für den Schleifenanfang zurückgesprungen und der zugehörige Satz gelesen wird.

Ist nach Lesen eines Satzes aus der Ablaufeinheit ABLE..., wie anhand von FIG 6A und FIG 6B erläutert, kein weiterer Satz zu lesen, dann wird gemäß dem Anschluß F für FIG 6C in die Vorbereitungen für den Zugriff zum angeschlossenen Datenbanksystem übergeleitet, indem die benötigten Schlüssel gemäß der Schlüsselabbildungstabelle KTAB und die benötigten Daten aus dem Übergabebereich UEB bzw. dem Tabellenbereich TABB an der Schnittstelle zum Datenbanksystem bereitgestellt und das betroffene Datenbanksystem über die vorgeschaltete Zugriffseinheit ZE... aufgerufen wird.

Ein solcher Aufruf umfaßt neben den üblichen Angaben für gemeinsame Speicherbereiche den vollständigen jeweils gelesenen Datensatz der Satzart 1 aus der Ablaufeinheit als Datenstring und bei einer Suchabfrage einen zusätzlichen anhand des Suchausdruckes im gelesenen Satz der Satzart 2 aus dem Werkbereich WB zusammengestellten zweiten Datenstring, sowie den betroffenen Datensatz DS und benötigte Daten aus dem Aufrufparameterwort für die Schnittstelle DUNST durch das jeweilige Anwenderprogramm AP....

Nach dem Absetzen eines solchen Datenbankaufrufes wartet die Schnittstellensteuerung die Rückmeldung des Datenbanksystems ab. Wird ein Abbruchfehler gemeldet, erfolgt gemäß dem Anschluß H zur FIG 6A eine entsprechende Rückmeldung an das Anwenderprogramm und der eingeleitete Steuerungsablauf wird beendet. In gleicher Weise reagiert die Schnittstellensteuerung, wenn ein sonstiger Fehler gemeldet wird und das Weiterverarbeitungskennzeichen WV-KZ in der Satzart 1 nicht gesetzt ist.

Im anderen Falle wird unabhängig davon, ob ein sonstiger Fehler vorliegt oder nicht, bei gesetztem Weiterverarbeitungskennzeichen die Position des nächstfolgenden Satzes in der Ablaufeinheit eingestellt. Zum selben Ergebnis gelangt die Steuerung, wenn kein Fehler vorliegt und zusätzlich kein Sprungziel im steuernden Satz der Satzart 1 angegeben ist. Ist dagegen ein Sprungziel angegeben, wird überprüft, ob aufs Schleifenende gesprungen werden soll und gegebenenfalls die entsprechende Position in der Ablaufeinheit einzustellen ist, oder ob das Ende der Transferfunktion erreicht und dementsprechend ein Merker zu setzen ist. Liegt keine dieser Sonderbedingungen vor, wird schließlich die angegebene Sprungposition eingestellt.

Nach Sicherstellung dieser den weiteren Fortgang des Steuerungsablaufes in der Schnittstellensteuerung DUNST betreffenden Prüfungsergebnisse, werden zunächst die Schlüsselwerte entsprechend der Schlüsselabbildungstabelle KTAB angepaßt und dann geprüft, ob sich der Datenbankzugriff auf ein "Lesen mit Datentransfer" bezog, da lediglich in diesem Falle ein Datentransfer der gewünschten Datenfelder aus dem gelesenen Datensatz DS in den Übergabebereich UEB bzw. den Tabellenbereich TABB entsprechend

den Angaben der zugehörigen Abbildungstabelle ATAB... gemäß FIG 2 erforderlich ist.

Nach dieser Prüfung und nach gegebenenfalls ausgeführtem Datentransfer wird dann entweder bei gesetztem Endemerker und nach entsprechender Rückmeldung an das Anwenderprogramm der Steuerungsablauf ebenfalls beendet oder der durch die eingestellte Position gekennzeichnete Satz aus der Ablaufeinheit ABLE... gelesen und der Steuerungsablauf in der bereits beschriebenen Weise fortgesetzt.

Wie bereits aus FIG 6B und FIG 6C ersichtlich, kann durch die Angaben in der jeweiligen Ablaufeinheit ABLE der Steuerungsablauf in der Schnittstellensteuerung DUNST in vielfältiger Weise beeinflußt und so den unterschiedlichen Anforderungen entsprochen werden. Das gilt insbesondere für die Steuerung der Schleifenverarbeitung bei der Erstellung von Tabellen im Tabellenbereich TABB und deren Bearbeitung.

Der Anfang einer Schleife wird beispielsweise durch den Eintrag "SCHANF" und das Ende der Schleife durch den Eintrag "SCHEND" im Feld 6 der Satzart 1 gekennzeichnet, ohne daß dadurch zunächst ein Zugriff auf das Datenbanksystem ausgelöst wird. So wird nach "SCHANF" immer der Satz der nächsten Position gelesen und die Position des Schleifenanfangs gesichert. Danach werden bei normaler Schleifenverarbeitung die Sätze aller nachfolgenden Positionen gelesen, bis der Satz mit der Schleifenendemarkierung erreicht wird. Tritt bis dahin kein Endekriterium auf, wird auf die gemerkte Position des Schleifenanfanges zurückgesprungen und der Schleifendurchlauf wiederholt. Tritt dagegen zwischenzeitlich ein Endekriterium auf, so werden die nachfolgenden Satzpositionen bis zum Schleifenende übersprungen und die sich daran anschließenden Positionen abgearbeitet.

Ein Aussprung aus einer Schleife kann zum Beispiel erfolgen,

- wenn ein Fehler vom Datenbanksystem gemeldet wird und das Weiterverarbeitungskennzeichen WV-KZ nicht gesetzt ist,
- wenn kein weiterer Datensatz vorgegebener Art mehr gefunden wird und das Weiterverarbeitungskennzeichen gesetzt ist,
- wenn der vorgegebene Wert eines Schleifenzählers gemäß der Angabe in Feld x+3 von Satzart 1 erreicht wird,
- wenn vorgegebene Bedingungen gemäß der Satzart 3 erfüllt sind und entweder der Steuerungslauf beendet oder auf den Schleifenanfang gesprungen werden soll.

Abgesehen vom Abbruch im Fehlerfall wird dabei der neue Aufsetzpunkt für die weiterführende Position durch eine entsprechende Sprungangabe im Feld x+6 der Satzart 1 bzw. im Feld 11 der Satzart 3 gekennzeichnet.

Auch eine Verschachtelung von mehreren Schleifen ist in einfacher Weise möglich, indem nach einem Schleifenanfang der ersten Schachtel ein weiterer Schleifenanfang einer weiteren Schachtel vor Erreichen der Schleifenendemarkierung für die erste Schachtel in die Positionsfolge eingeschoben wird. In diesem Falle müssen die Positionen aller Schleifenanfänge und Schleifenenden gesichert werden. Die Datenübertragung in die aufzubauende Tabelle im Tabellenbereich TABB erfolgt dabei immer nach dem Schleifenende der innersten Schleife mit Wiederholung der im Rahmen der eröffneten äußeren Schleifen bereits erhaltenen und zwischengespeicherten Feldeinträge.

Es soll zum Beispiel eine Tabelle der nachfolgenden Art aus Feldern F... von vier verschiedenen Datensatzarten DS1 bis DS4 aufgebaut werden:

DS1/F1 , DS2/F1 , DS3/F1.1 , DS4/F1.1
DS1/F1 , DS2/F1 , DS3/F1.2 , DS4/F1.2
DS1/F1 , DS2/F1 , DS3/F1.3 , DS4/F1.3
DS1/F2 , DS2/F2 , DS3/F2.1 , DS4/F2.1
DS1/F2 , DS2/F2 , DS3/F2.2 , DS4/F2.2
DS1/F2 , DS2/F2 , DS3/F2.3 , DS4/F2.3
DS1/F3 , DS2/F3 , DS3/F3.1 , DS4/F3.1
DS1/F3 , DS2/F3 , DS3/F3.2 , DS4/F3.2
DS1/F3 , DS2/F3 , DS3/F3.3 , DS4/F3.3

In diesem Falle ergibt sich folgende Schleifenstruktur:

```
┌►SCHANF(1)
│            FETCH   DS1
│            FETCH   DS2
│           ┌►SCHANF2
│           │          FETCH DS3
│           │          FETCH DS4
│           └SCHEND2
│                 ↓
└ SCHEND(1) ◄── EOF(2)
      ↓
    EOF(1)
```

Daraus ergibt sich folgender Steuerungsablauf:

Nach Beginn der äußeren Schleife mit SCHANF1 werden nacheinander zunächst der erste Satz von DS1 und DS2 gelesen und die gewünschten Felder F1 feldtypgerecht zwischengespeichert. Danach werden mit Beginn der inneren Schleife mit SCHANF2 die ersten Sätze von DS3 und DS4 gelesen und die gewünschten Felder F1.1 erhalten. Mit Schleifenende SCHEND2 erfolgt dann die Übertragung aller vier Felder in den Tabellenarbeitsbereich zur Erstellung der ersten Tabellenzeile. Die innere Schleife zwischen SCHANF(2) und SCHEND(2) wird nun solange wiederholt, bis das Endesignal EOF(2) auftritt, und mit jedem Schleifenende SCHEND(2) wird eine Zeile der Tabelle erstellt, wobei die zwischengespeicherten Felder der eröffneten äußeren Schleife in jeder Tabellenzeile wiederholt werden. Nach Rücksprung in die äußere Schleife zwischen SCHANF(1) und SCHEND(2) wiederholt sich der beschriebene Steuerungsablauf, bis schließlich das Endesignal EOF(1) erscheint.

Zum Abschluß sei anhand er globalen Verarbeitungsfunktion "Stückliste auflösen" der Aufbau der zugehörigen Ablaufeinheit erläutert. FIG 7 zeigt zu diesem Zweck die Beziehungen der einzelnen Stammdatensätze (P1-Sätze) zu den einzelnen Stücklistenpositionen eines Produktes mit der Sachnaummer S1, das zum Beispiel aus den Aggregaten AG mit den Sachnummern S21 bis S23 besteht, die wiederum aus Baugruppen mit den Sachnummern S31 bis S35 zusammengesetzt sind, wobei die Baugruppen aus Teilen mit den Sachnummern S41 bis S48 gebildet werden. Die Beziehungen (SET) zwischen den einzelnen Stammdatensätzen sind durch den einzelnen Positionen entsprechende Hilfssätze (P2-Sätze) der verschiedenen Fertigungsstufen W-FST2 bis W-FST4 analog dem Aufbau einer UDS-Datenbank festgelegt, wie sie beispielsweise in der Siemens-Druckschrift "UDS V3.2 - Entwerfen und Definieren", Bestellnummer U929-J-Z55-1 beschrieben ist. Aufgrund dieser vorgegebenen Beziehungen ergibt das die nachfolgend dargestellte Stückliste mit den den einzelnen Sachnummern zugeordneten Fertigungsstufen W-FST...

Stückliste Produkt S1

| W-FST... | SACH-Nr. ---------- |
|---|---|
| 2 | S21 |
| 3 | S31 |
| 4 | S41 |
| 4 | S42 |
| 4 | S43 |
| 3 | S32 |
| 3 | S33 |
| 4 | S44 |
| 4 | S45 |
| 2 | S22 |
| 3 | S34 |
| 3 | S35 |
| 4 | S46 |
| 4 | S47 |
| 4 | S48 |
| 2 | S23 |

FIG 8 zeigt den Aufbau der zur Erstellung derartiger Stücklisten benötigten Ablaufeinheit ABLE... von FIG 1, die der beispielsweise aus der Funktionsklasse FKT = 02 und der Transferfunktion TFKT = 01 gebildeten globalen Verarbeitungsfunktionen "Stückliste auflösen" entspricht. Die ersten drei Zeilen der Tabelle von FIG 8 geben nacheinander die Feldnummern und die Feldbezeichnungen entsprechend den beiden benötigten Steuersatzarten SA1 und SA3 entsprechend FIG 3A und FIG 3B sowie FIG 5 wieder. Darunter folgen dann die einzelnen Steuersätze entsprechend den Positionen POS10 bis POS160 in der ersten Spalte. Zugrundegelegt ist dabei wiederum ein UDS-Datenbanksystem, gekennzeichnet durch den Eintrag U im Feld x + 3. Entsprechend sind die Angaben in den Feldern 5 bis x gewählt, wozu Einzelheiten aus der Siemens Druckschrift "UDS V3.2 - Anwendungen programmieren", Bestellnummer U930-J-Z55-1 entnehmbar sind.

Mit dem Steuersatz der Position POS10 wird das Datenbanksystem in bekannter Weise lesend eröffnet und der vorgegebene Stammdatensatz P1 gemäß Position POS20 gelesen. Anhand von Positionen POS30 wird dann geprüft, ob der im Feld P1STR des gelesenen Satzes enthaltene Zählerwert größer ist, als der im Werkbereich W hinterlegte Wert "0". Ist dies nicht der Fall, weil keine Stückliste existiert, wird entsprechend der Angabe SPRUNG 999 die Verarbeitung abgebrochen und eine entsprechende Rückmeldung zum Anwenderprogramm gegeben. Bei einem Wert größer als 0 wird gemäß Position POS40 der Fertigungsstufenzähler W-FST im Werkbereich W auf den angegebenen Wert "2" gesetzt und anschließend gemäß Position POS50 mit der Angabe "SCHANF" in den Schleifenbeginn für die Strukturauflösung übergeleitet.

Als erstes wird mit Position POS60 anhand der Beziehung SETP1P2S der erste der zugehörigen P2-Sätze gelesen und, wenn vorhanden, wird mit der Angabe W-FST im Feld VERGL für den P2-Satz die Fertigungsstufe W-FST markiert. Anschließend wird gemäß Position POS70 anhand der Beziehung SETP1P2V der zugehörige Stammdatensatz P1 gesucht und ebenfalls mit der Angabe W-FST im Feld VERGL für den P1-Satz die Fertigungsstufe markiert. Entsprechend der nachfolgenden Position POS80 wird

dann geprüft, ob im Feld P1STR des gelesenen P1-Satzes ein Wert größer 0 enthalten ist. Ist dies der Fall, wird gemäß der Sprungangabe SPRUNG100 mit der Position POS100 fortgesetzt und der Datenbankschlüssel der erreichten Fertigungsstufe sichergestellt. Mit der nachfolgenden Position POS110 wird geprüft, ob die zulässige Anzahl von Fertigungsstufen, zum Beispiel 49, überschritten wird. Bei Überschreitung wird gemäß SPRUNG999 abgebrochen, andernfalls wird gemäß der nachfolgenden Position POS120 der Wert der Fertigungsstufe um 1 erhöht und auf das Schleifenende "SCHEND" gemäß Position POS160 gesprungen. Mit dem Schleifenende wird jeweils das gefundene Element für die aufzubauende Tabelle in den Tabellenarbeitsbereich TABB übertragen und auf den Schleifenanfang gemäß Position POS50 zurückgesprungen.

Ausgehend von einem ersten Stammsatz wird so durch ständiges Erhöhen der Fertigungsstufe W-FST... ein Stammdatensatz nach dem anderen, zum Beispiel die der Sachnummern S21, S31 und S41 in FIG 7, ermittelt, bis das Ende des ersten Astes erreicht ist.

Da beim jeweils zuletzt gelesenen P1-Satz eines Astes das Feld P1STR den Wert "0" aufweist, erfolgt von der Position POS80 aus kein unmittelbarer Sprung auf die Position POS100, sondern es wird linear mit der Position POS90 weitergearbeitet und damit auf den gemäß Position POS60 zuletzt gelesenen P2-Satz für die nächste Schleife aufgesetzt. Da jedoch wegen der in Position POS120 weiter erhöhten Fertigungsstufe kein P2-Satz mehr gefunden wird, erfolgt nach Position POS60 ein Sprung auf Position POS130, und nach Erniedrigung der Fertigungsstufe gemäß Position POS140 wird dann ausgehend von dem in Position POS90 gekennzeichneten P2-Satz der nächste P2-Satz, z.B. 3.2, gelesen und der Stammdatensatz für die Sachnummer S42 ermittelt usw..

Dieser Ablauf wiederholt sich, bis in der Fertigungsstufe W-FST4 kein weiterer P2-Satz gefunden und in die Fertigungsstufe W-FST3 gemäß Position POS140 zurückgeschaltet wird. Anhand des in dieser Fertigungsstufe vorher sichergestellten Datenbankschlüssels wird dann der zuvor bereits einmal gelesene P2-Satz ermittelt und von dort aus die Suche nach dem nächsten P2-Satz, z.B. 2.2, in dieser Fertigungsstufe fortgesetzt usw..

Wie aus der vorangehend gezeigten Stückliste zu FIG 7 ersichtlich ist, werden so nacheinander alle Äste von FIG 7 mit entsprechend sich ändernder Fertigungsstufe W-FST... abgearbeitet, bis nach Ermittlung des letzten P2-Satzes, nämlich 1.3, in der Fertigungsstufe W-FST2 kein weiterer P2-Satz mehr gefunden wird und daher ausgehend von Position POS60 mit Sprung auf Position POS130 der Suchlauf beendet wird, was durch den Hinweis SPRUNG999 gekennzeichnet ist.

Mit einem einzigen Aufruf des Anwenderprogrammes an die Schnittstellensteuerung kann also zum Beispiel eine komplette Stückliste ermittelt und dem Anwenderprogramm zur Bearbeitung zur Verfügung gestellt werden.

## Patentansprüche

**1.** Schnittstellensteuerung zur Ansteuerung von Datenbanksystemen (DHS) zwecks Bereitstellung bzw. Abspeicherung von zur Ausführung von in Anwenderprogrammen (AP) enthaltenen Verarbeitungsfunktionen benötigten Daten durch die Zugriffssteuerung (DBMS) des Datenbanksystems (DHS) unter Benutzung eines Feldkataloges (IFK) zur Beschreibung der einzelnen Datenfelder der Datensätze im Datenbanksystem und zur Verwaltung der Feldbeziehungen zu den einzelnen Übergabe-, Tabellen- und Arbeitsbereichen für die Anwenderprogramme,

**dadurch gekennzeichnet,**

- daß der Aufruf der Schnittstellensteuerung (DUNST) durch die Anwenderprogramme (AP...) über in diesen enthaltene globale Verarbeitungsfunktionen (GVF) erfolgt, die im Rahmen von datenbankbezogenen Teilaufgaben der Anwenderprogramme (AP...) durch äußere Eingriffe des jeweiligen Anwenderprogrammes nicht unterbrechbare datenbankbezogene Verarbeitungsabläufe betreffen,
- daß den einzelnen Verarbeitungsfunktionen (GVF) entsprechende und durch diese aufrufbare Ablaufeinheiten (ABLE...) vorgesehen sind, in denen alle für die Ausführung der Verarbeitungsfunktion benötigten Zugriffsbefehle samt der zugehörigen Parameter für das Datenbanksystem (DB...) in der jeweiligen Datenmanipulationssprache als Befehlsfolge für die Ansteuerung der Zugriffssteuerung (DBMS...) des Datenbanksystems (DB...) zusammengefaßt sind, wobei die Ansteuerung der Zugriffssteuerung (DBMS...) über eine gesonderte datenbankabhängige Zugriffseinheit (ZE...) zur datenbankbezogenen Versorgung der Parameterfelder der Zugriffssteuerung aus den zur Verfügung gestellten Parametern und zur Umsetzung der datenbankbezogenen Rückmeldungen in neutrale Rückmeldungen für das Anwenderprogramm (AP...) erfolgt,
- daß die Übertragung der im Rahmen einer Verarbeitungsfunktion benötigten Datenfelder der

einzelnen Datensätze des Datenbanksystems (DB...) zu den Übergabe- und Tabellenbereichen (UEB, TABB) des Anwenderprogrammes (AP...) und umgekehrt anhand von aus dem Feldkatalog (IFK) abgeleiteten und in Abbildungstabellen (ATAB...) zusammengefaßten Übertragungsregeln erfolgt, wobei die von einer Verarbeitungsfunktion (GVF) jeweils benötigte Abbildungstabelle (ATAB...) durch die Aufrufparameter für die Schnittstellensteuerung (DUNST) vorgebbar ist, und

- daß die Überwachung der Schnittstellen zum Anwenderprogramm (AP...) und zum Datenbanksystem (DB...), deren Versorgung abhängig von der jeweiligen Ablaufeinheit (ABLE...) und der gewählten Abbildungstabelle (ATAB...) mit den jeweiligen Daten sowie die gesamte Steuerung des Arbeitsablaufes innerhalb der Schnittstellensteuerung (DUNST) durch eine gesonderte Schnittstellensteuereinheit (SS-STE) erfolgt.

**2.** Schnittstellensteuerung nach Anspruch 1,
**dadurch gekennzeichnet,** daß die globalen Verarbeitungsfunktionen (GVF) aus je einem Element der Teilmengen Funktionsklasse (FKT) und Transferfunktion (TFKT) gebildet sind, wobei diesselbe Transferfunktion (TFKT) mit unterschiedlichen Funktionsklassen (FKT) kombinierbar ist.

**3.** Schnittstellensteuerung nach Anspruch 2,
**dadurch gekennzeichnet,** daß für das Eröffnen und Schließen eines Datenbanksystems (DB...) gesonderte Funktionsklassen (FKT) vorgesehen sind, wobei die damit kombinierbaren Transferfunktionen (TFKT) den unterschiedlichen Zugriffsarten (z.B. RETRIEVAL oder UPDATE) des jeweiligen Datenbanksystems (DB...) entsprechen.

**4.** Schnittstellensteuerung nach einem der Ansprüche 1 bis 3,
**dadurch gekennzeichnet,** daß die Ablaufeinheiten (ABLE...) aus einer Folge (POS...) von Steuersätzen dreier verschiedener Satzarten (SA1 bis SA3) aufgebaut sind, von denen

- die Steuersätze der ersten Satzart (SA1) die Zugriffe für das jeweilige Datenbanksystem (DB...) mit allen Angaben zum Absetzen eines CALL-DML-Aufrufes sowie Steuerdaten,
- die Steuersätze der zweiten Satzart (SA2) einen Suchausdruck in Ergänzung der Zugriffsbefehle aus der ersten Satzart (SA1) und
- die Steuersätze der dritten Satzart (SA3) Anweisungen zur Durchführung von Vergleichs- und Rechenoperationen beim Abarbeiten der Steuersätze der Ablaufeinheit und zur Änderung der Abarbeitungsfolge im Rahmen von bedingten und unbedingten Sprüngen

beinhalten.

**5.** Schnittstellensteuerung nach einem der Ansprüche 1 bis 4,
**dadurch gekennzeichnet,** daß an die Schnittstellensteuerung (DUNST) gleichzeitig unterschiedliche Datenbanksysteme (DBA und DBB) über individuelle Zugriffseinheiten (z.B. ZEA bzw. ZEB) anschließbar sind und daß in den Steuersätzen der ersten Satzart (SA1) der einzelnen Ablaufeinheiten (ABLE...) ein gesondertes Datenbankkennzeichen (DB-KZ) vorgesehen ist, das das jeweils anzusteuernde Datenbanksystem (z.B. DBA) kennzeichnet.

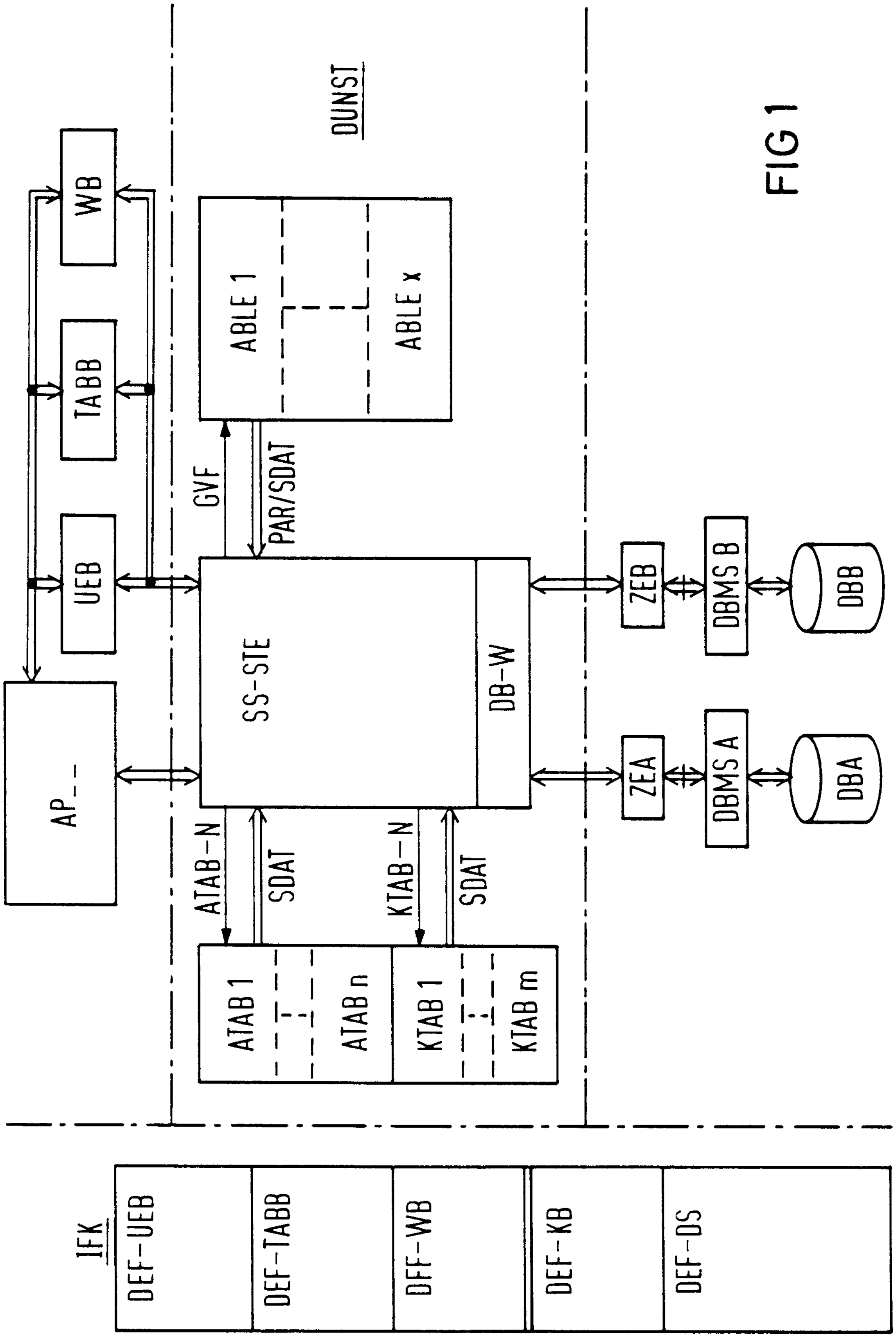
DUNST
WB
TABB
UEB
AP__
ABLE 1
ABLE x
GVF
PAR/SDAT
SS-STE
DB-W
ZEB
DBMS B
DBB
ZEA
DBMS A
DBA
ATAB-N
SDAT
KTAB-N
SDAT
ATAB 1
ATAB n
KTAB 1
KTAB m
IFK
DEF-UEB
DEF-TABB
DEF-WB
DEF-KB
DEF-DS

FIG 1

FIG 2

| 1. | 2. | 3. | 4. | 5. | 6. | 7. |
|---|---|---|---|---|---|---|
| DS-Name | Feldname | Adresse im DS | Feldlänge | Typ | Bereichs-satz | Adresse im Bereichssatz |
| ART-SATZ | ARTNR | 1 | 5 | N | U | 10 |
| ART-SATZ | ARTNR-FLAG | --- | 1 | A | U | 15 |
| ART-SATZ | ARTBEZ | 25 | 35 | A | U | 16 |
| ART-SATZ | ARTBEZ-FLAG | --- | 1 | A | U | 51 |
| ART-SATZ | ARTAEND | 110 | 3 | N | U | 63 |
| BEN-SATZ | BENANG | 14 | 10 | A | U | 52 |
| BEN-SATZ | BENANG-FlAG | --- | 1 | A | U | 62 |
| BEN-SATZ | BENAEND | 75 | 3 | N | U | 66 |
| . . . | . . . | . . . | . . . | . . . | . . . | . . . |
| POS-SATZ | POSBEZ | 37 | 30 | A | A | 10 |
| POS-SATZ | POSBEZ-FLAG | --- | 1 | A | A | 40 |
| POS-SATZ | POSBEZ-IND | --- | 2 | N | A | 41 |
| POS-SATZ | POSNR | 1 | 5 | A | A | 43 |
| POS-SATZ | POSNR-FLAG | --- | 1 | A | A | 48 |
| POS-SATZ | POSNR-IND | --- | 2 | N | A | 49 |
| POS-SATZ | POSAEND | 95 | 3 | N | A | 51 |
| . . . | . . . | . . . | . . . | . . . | . . . | . . . |
| --- | WRK-ZAHL | --- | 2 | N | W | 51 |
| --- | WRK-VERG | --- | 8 | A | W | 19 |
| . . . | . . . | . . . | . . . | . . . | . . . | . . . |

FIG 3a

| Satzart 1 | |
|---|---|
| Feld | Bedeutung |
| 1. Funktionsklasse (FKT)<br>2. Transferfunktion (TFKT) | Beide Felder kennzeichnen die GVF und damit den Schlüssel für die jeweils zuständige Ablaufeinheit ABLE |
| 3. Position (POS) | Laufende Nummer der einzelnen Positionen für die innerhalb der GVF auszuführenden Operationen, wobei für jede Position ein Satz der drei möglichen Satzarten vorgesehen ist. |
| 4. Satzart (SA=1) | Kennzeichnet eine der drei möglichen Satzarten 1, 2 oder 3 |
| 5. DS-Name | Name des im Datenbanksystem aufzusuchenden Datensatzes und Schlüssel für die in der jeweils ausgewählten Abbildungstabelle ATAB auszuwählenden Übertragungsregeln |
| 6. Funktionscode (FCODE) | Kennzeichnet die Zugriffsart entsprechend der jeweiligen DB-Beschreibung bzw. bei Schleifenbildung den Schleifenanfang oder das Schleifenende |
| 7. Zugriffrichtung | Gibt die Richtung des Datentransfers zwischen dem Datenbanksystem und den dem Anwenderprogramm zugeordneten Bereichen bzw. der Schnittstellensteuerung entsprechend der jeweiligen Zugriffsart an |
| 8.<br>.<br>.<br>.<br>x | weitere datenbankabhängige Angaben, um den gewünschten Zugriff veranlassen zu können. |

## FIG 3b

| Satzart 1 (Fortsetzung) | |
|---|---|
| Feld | Bedeutung |
| x+1 WV-KZ | Weiterverarbeitungskennzeichen |
| x+2 AB-KZ | Abbruchkennzeichen |
| x+3 VERGL | Vergleichsfeld, das den Namen eines Schleifenzählers oder einer Feldmarkierung enthält |
| x+4 DH-KZ | Kennzeichnet das betroffene Datenbanksystem |
| x+5 SA-KZ | Hinweiskennzeichen, daß Satzart 2 an nächster Position folgt |
| x+6 SPRUNG | Positionsnummer, die gegebenenfalls abweichend von der in der Ablaufeinheit ABLE festgelegten Folge die im Rahmen eines Sprunges auszuführende nächste Position angibt |

## FIG 4

| Satzart 2 | |
|---|---|
| Feld | Bedeutung |
| 1. Funktionsklasse (FKT)<br>2. Transferfunktion (TFKT)<br>3. Position (POS)<br>4. Satzart: (SA=2) | wie bei Satzart 1 |
| 5. Suchausdruck | Gibt die Feldinhalte, die die zu suchenden Datensätze im betroffenen Datenbanksystem aufweisen müssen, durch Vergleichsbedingungen vor |

# FIG 5

| Satzart 3 | |
|---|---|
| **Feld** | **Bedeutung** |
| 1. Funktionsklasse (FKT)<br>2. Transferfunktion (TFKT)<br>3. Position (POS)<br>4. Satzart: (SA=3) | wie bei Satzart 1 |
| 5. Vergleichsfeld 1 (VERGL1) | Feldname aus WB, UEB bzw. TABB oder Datensatz, dessen Inhalt zu berücksichtigen ist, bei Rechenoperationen steht in diesem Feld das Ergebnis |
| 6. Bereichskennzeichen (BERKZ1) | Zeigt den Bereich WB, UEB bzw. TABB oder DS an, wo sich das Vergleichsfeld 1 befindet |
| 7. Operationscode 1 (OP-1) | Kennzeichnet mit N bei Vergleichsoperationen gemäß OP-2 die Negation der Vergleichsbedingung |
| 8. Operationscode 2 (OP-2) | Gibt auszuführende Vergleichsoperationen oder Rechenoperationen an |
| 9. Vergleichsfeld 2 (VERGL2) | wie 5.) |
| 10. Bereichskennzeichen (BERKZ2) | wie 6.) für Vergleichsfeld 2 |
| 11. SPRUNG | Positionsnummer, auf die bei erfüllten Vergleichsbedingungen oder nach Ausführung einer Rechenoperation gesprungen werden soll |

FIG 6a

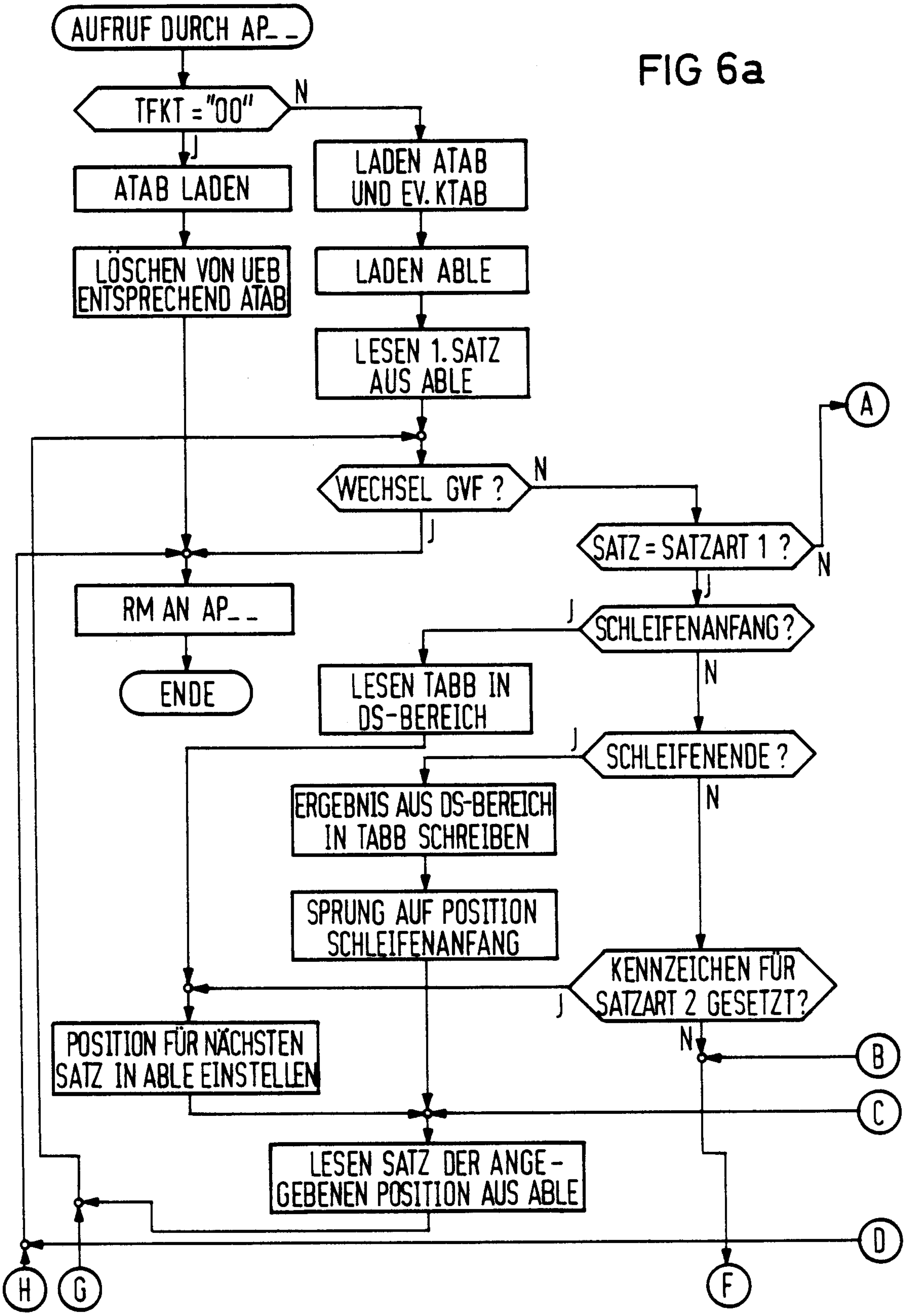
AUFRUF DURCH AP_ _
TFKT = "00"
N
J
ATAB LADEN
LADEN ATAB UND EV. KTAB
LÖSCHEN VON UEB ENTSPRECHEND ATAB
LADEN ABLE
LESEN 1. SATZ AUS ABLE
A
WECHSEL GVF ?
N
J
SATZ = SATZART 1 ?
N
J
RM AN AP_ _
ENDE
J
SCHLEIFENANFANG ?
LESEN TABB IN DS-BEREICH
N
J
SCHLEIFENENDE ?
N
ERGEBNIS AUS DS-BEREICH IN TABB SCHREIBEN
SPRUNG AUF POSITION SCHLEIFENANFANG
KENNZEICHEN FÜR SATZART 2 GESETZT?
J
N
POSITION FÜR NÄCHSTEN SATZ IN ABLE EINSTELLEN
B
C
LESEN SATZ DER ANGEGEBENEN POSITION AUS ABLE
D
H
G
F

FIG 6b

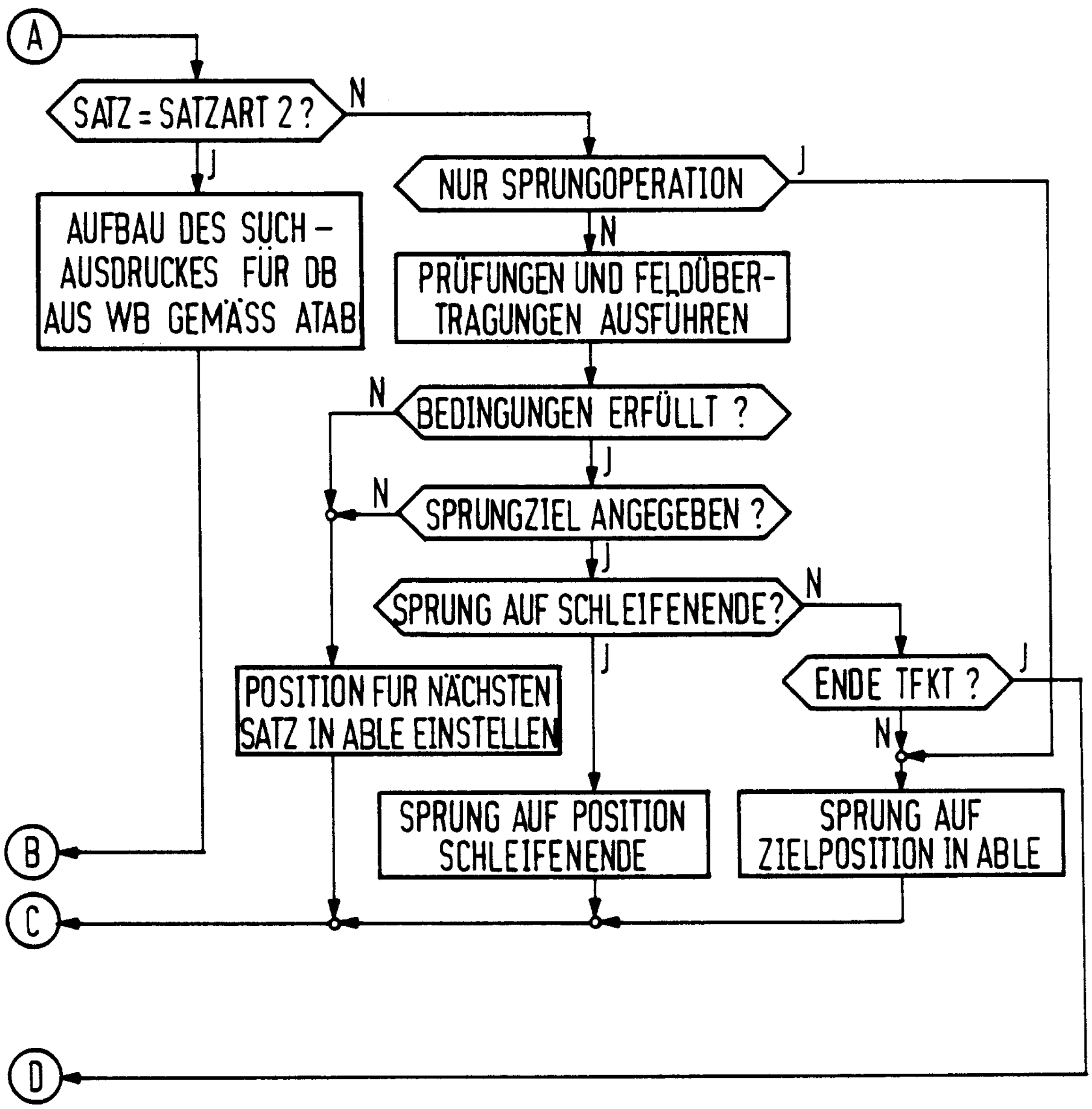
A
SATZ = SATZART 2 ?
N
J
AUFBAU DES SUCH-AUSDRUCKES FÜR DB AUS WB GEMÄSS ATAB
NUR SPRUNGOPERATION
J
N
PRÜFUNGEN UND FELDÜBER-TRAGUNGEN AUSFÜHREN
N
BEDINGUNGEN ERFÜLLT ?
J
N
SPRUNGZIEL ANGEGEBEN ?
J
SPRUNG AUF SCHLEIFENENDE?
N
J
ENDE TFKT ?
J
N
POSITION FUR NÄCHSTEN SATZ IN ABLE EINSTELLEN
SPRUNG AUF POSITION SCHLEIFENENDE
SPRUNG AUF ZIELPOSITION IN ABLE
B
C
D

FIG 6c

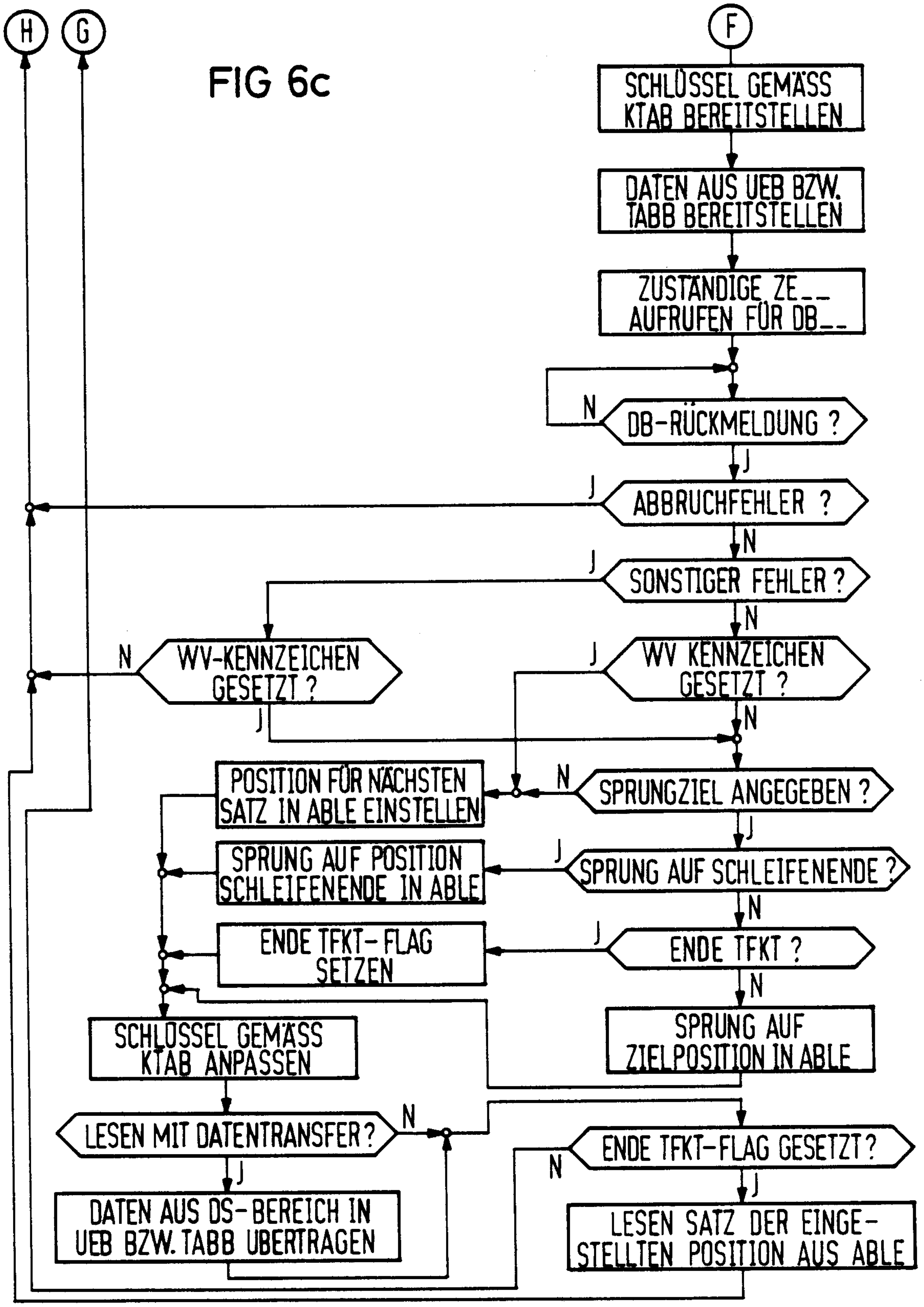
H
G
F
SCHLÜSSEL GEMÄSS KTAB BEREITSTELLEN
DATEN AUS UEB BZW. TABB BEREITSTELLEN
ZUSTÄNDIGE ZE__ AUFRUFEN FÜR DB__
N
DB-RÜCKMELDUNG ?
J
ABBRUCHFEHLER ?
N
SONSTIGER FEHLER ?
N
WV-KENNZEICHEN GESETZT ?
J
WV KENNZEICHEN GESETZT ?
N
POSITION FÜR NÄCHSTEN SATZ IN ABLE EINSTELLEN
SPRUNGZIEL ANGEGEBEN ?
SPRUNG AUF POSITION SCHLEIFENENDE IN ABLE
SPRUNG AUF SCHLEIFENENDE ?
ENDE TFKT-FLAG SETZEN
ENDE TFKT ?
SPRUNG AUF ZIELPOSITION IN ABLE
SCHLÜSSEL GEMÄSS KTAB ANPASSEN
LESEN MIT DATENTRANSFER ?
ENDE TFKT-FLAG GESETZT ?
DATEN AUS DS-BEREICH IN UEB BZW. TABB ÜBERTRAGEN
LESEN SATZ DER EINGE-STELLTEN POSITION AUS ABLE

FIG 7

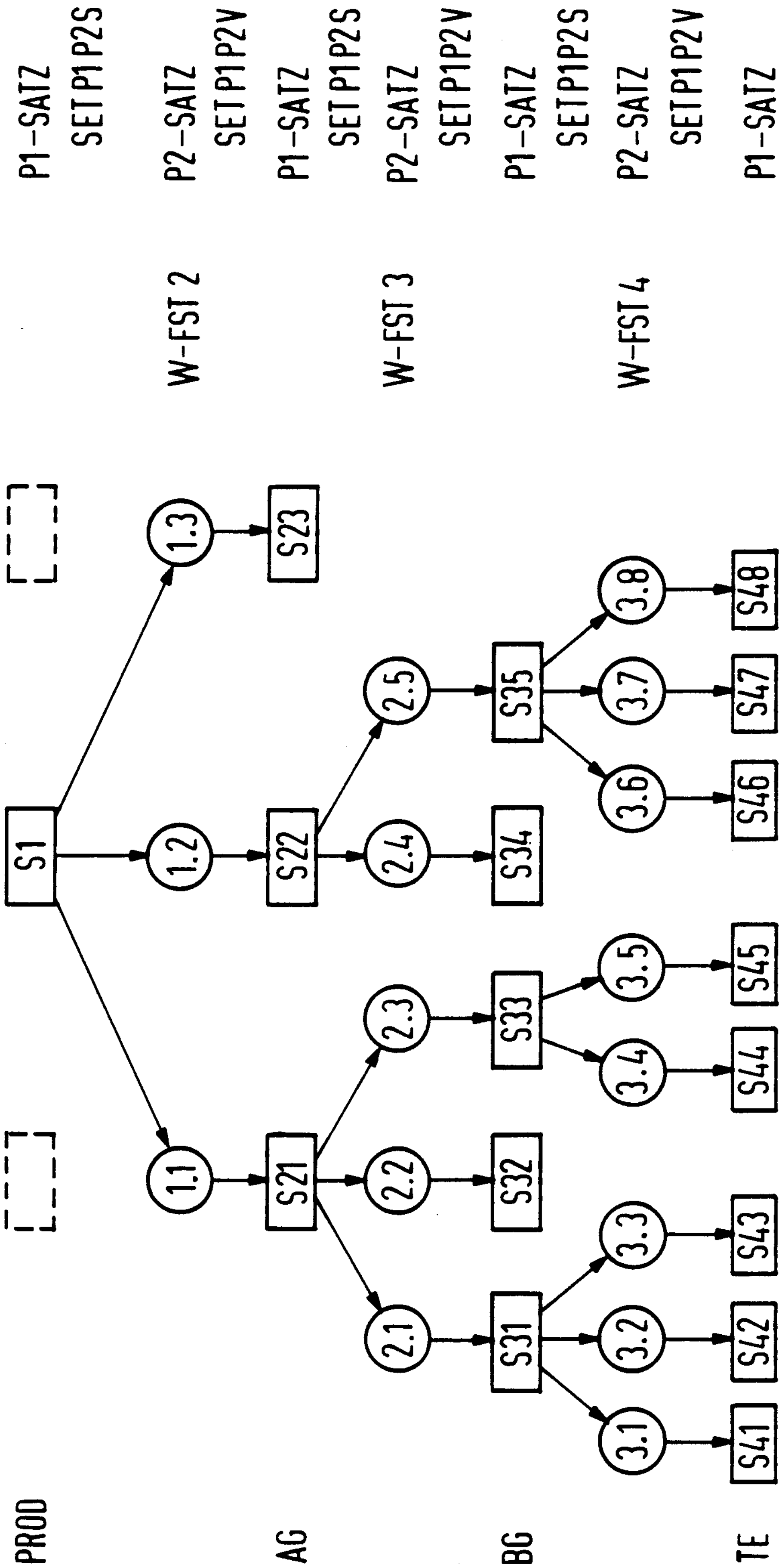
PROD
AG
BG
TE
S1
1.1
1.2
1.3
S21
S22
S23
2.1
2.2
2.3
2.4
2.5
S31
S32
S33
S34
S35
3.1
3.2
3.3
3.4
3.5
3.6
3.7
3.8
S41
S42
S43
S44
S45
S46
S47
S48
W-FST 2
W-FST 3
W-FST 4
P1-SATZ
SET P1 P2 S
P2-SATZ
SET P1 P2 V
P1-SATZ
SET P1 P2 S
P2-SATZ
SET P1 P2 V
P1-SATZ
SET P1 P2 S
P2-SATZ
SET P1 P2 V
P1-SATZ

# FIG 8

(1) FKT: 02 (2) TFKT: 01

| 3. | 4. | 5. | 6. | 7. | 8. | 9. | 10. | x | x+1 | x+2 | x+3 | x+4 | x+5 | x+6 (11) |
|---|---|---|---|---|---|---|---|---|---|---|---|---|---|---|
| POS | SA1 | DS-NAME | FCODE | ---- | FOPT | ---- | SET NAME | ---- | WV KZ | AB KZ | VERGL | DH KZ | SA KZ | SPRUNG |
| POS | SA3 | VERGL1 | BERKZ1 | OP-1 | OP-2 | VERGL2 | BERKZ2 | - | - | - | - | - | - | SPRUNG |
| 10 | 1 | | READYC | | ALLTR | | | | | | | U | | |
| 20 | 1 | P1-SATZ | FTCH2 | | AUYREC | | | | 0 | 0 | | U | | |
| 30 | 3 | P1-SATZ | B | N | > | W-C-0 | W | | | | | | | 999 |
| 40 | 3 | W-FST | W | | | W-C-2 | W | | | | | | | |
| 50 | 1 | | SCHANF | | | | | | | | | U | | |
| 60 | 1 | P2-SATZ | FTCH4 | | SETNXT | | P1P2S | | 1 | 0 | W-FST | U | | 130 |
| 70 | 1 | P1-SATZ | FTCH6 | | | | P1P2V | | 0 | 0 | W-FST | U | | |
| 80 | 3 | P1STR | A | | > | W-C-0 | W | | | | | | | 100 |
| 90 | 1 | P2-SATZ | FINDS | | CORUNT | | | | 0 | 0 | | U | | 999 |
| 100 | 1 | P2-SATZ | ACCPTC | | DBKREC | | | | 0 | 0 | | U | | |
| 110 | 3 | W-FST | W | | > | W-C-49 | W | | | | | | | 999 |
| 120 | 3 | W-FST | W | | + | W-C-1 | W | | | | | | | 160 |
| 130 | 3 | W-FST | W | | = | W-C-2 | W | | | | | | | 999 |
| 140 | 3 | W-FST | W | | - | W-C-1 | W | | | | | | | |
| 150 | 1 | P2-SATZ | FIND1 | | | | | | 0 | 0 | | U | | |
| 160 | 1 | | SCHEND | | | | | | | | | U | | |

Europäisches Patentamt

# EUROPÄISCHER RECHERCHENBERICHT

Nummer der Anmeldung

EP 91 11 0847

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WORLD PATENTS INDEX LATEST<br>Section EI, Week 9045, 20. Oktober 1990<br>Derwent Publications Ltd., London, GB;<br>Class T, AN 90-340351<br>* Zusammenfassung * | 1 | G06F15/40 |
| A | THE SECOND INT. CONF. ON COMPUTERS AND APPLICATIONS<br>23. Juni 1987, BEIJING, CHINA<br>Seiten 57 - 64;<br>T. WATANABE ET AL.: 'Architecture of integrated information system for intellectual information retrieval and effectual database management'<br>* Zusammenfassung; Abbildung 2 *<br>* Seite 58, linke Spalte, Zeile 11 - Seite 59, linke Spalte, Zeile 3 *<br>* Seite 60, linke Spalte, Zeile 10 - Zeile 21 *<br>* Seite 62, rechte Spalte, Zeile 9 - Zeile 39 * | 1,6 | |
| A | FIRST ANNUAL PHOENIX CONF. ON COMPUTERS AND COMMUNICATIONS, 1982 CONF. PROC.<br>9. Mai 1982, PHOENIX, US<br>Seiten 168 - 170;<br>M.I. CRYSTAL ET AL.: 'Fred, a front end for databases'<br>* das ganze Dokument * | 1,6 | RECHERCHIERTE SACHGEBIETE (Int. Cl.5)<br>G06F |

Der vorliegende Recherchenbericht wurde für alle Patentansprüche erstellt

| Recherchenort | Abschlußdatum der Recherche | Prüfer |
|---|---|---|
| DEN HAAG | 21 FEBRUAR 1992 | FOURNIER C.D.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)